# DEMANDE DE BREVET EUROPEEN

(11) **EP 4 761 180 A1**
(43) Date de publication de la demande: **17.06.2026**
(21) Numéro de dépôt: 25217953.6
(22) Date de dépôt: 24.11.2025
(51) Int. Cl.: H04L 9/40

(54) **PROCEDE DE SURVEILLANCE DU TRAFIC DE DONNEES D'UN SYSTEME DE COMMUNICATION**

(30) Priorité: 12.12.2024 FR 2414016
(71) Demandeur: Commissariat à l'Energie Atomique et aux Energies Alternatives, 75015 Paris (FR)
(72) Inventeur: IBN KHEDHER, Houda, 91191 Gif-sur-Yvette Cedex (FR)
(74) Mandataire: Atout PI Laplace

(57) **Abrégé**

L'invention concerne un procédé de surveillance du trafic de données entre des clients et des serveurs, mis en œuvre par un dispositif de surveillance, comprenant :
collecter des données d'observation du trafic courant entre les clients et les serveurs ;
effectuer à l'aide d'un module de détection automatique d'anomalies du trafic, nommé M6, une analyse d'une partie au moins des données d'observation courantes collectées et correspondant spécifiquement au type O6 d'angle d'observation propre au trafic entre un unique groupe de clients donné et un unique groupe de serveurs donné ;
effectuer à l'aide d'un autre module distinct de détection automatique d'anomalies du trafic, M7, une analyse d'une partie au moins des données d'observation courantes collectées et correspondant spécifiquement au type O7 d'angle d'observation propre au trafic entre l'ensemble des clients donné et l'ensemble des serveurs donné.

## Description

### Domaine technique :

L'invention se situe dans le domaine de la cybersécurité et de la surveillance des réseaux de transmission de données. Plus précisément, elle concerne les techniques de détection d'anomalies basées sur l'analyse du trafic dans un système de communication de type clients/serveurs.

### Technique antérieure :

Il peut s'avérer difficile de surveiller efficacement les interactions client-serveur. Tout d'abord, les comportements des utilisateurs (des dispositifs clients) sont hétérogènes et peuvent en outre varier au fil du temps, ce qui rend doublement difficile la détection d'une véritable déviation sans déclencher de fausses alarmes, car établir un profil de comportement "normal" pour l'ensemble des utilisateurs est donc complexe et peu précis. D'un autre côté, prévoir un système de surveillance par utilisateur, capable de suivre et comprendre son comportement individuel pour détecter toute anomalie, s'avère extrêmement coûteux en volume (et temps) de calcul, surtout lorsque le nombre d'utilisateurs est élevé.

Le même problème se pose du côté des ressources mises à disposition par les serveurs. Surveiller la façon dont une ressource est sollicitée par tous les utilisateurs ne permet pas de détecter facilement les anomalies, car elle peut être sollicitée de différentes manières selon les besoins de chaque utilisateur. De plus, l'évolution de la façon dont un utilisateur sollicite une ressource ne signifie pas nécessairement qu'il y a une anomalie, mais simplement que sa façon de la solliciter a évolué tout en restant normale. Prendre en compte cette évolution pour tous les utilisateurs qui sollicitent la ressource risque de rendre la détection des anomalies difficile et sujette aux fausses alarmes. Par ailleurs, une surveillance par ressource peut être également très coûteuse, car il faut analyser en détail toutes les interactions avec chaque ressource, ce qui peut rapidement devenir ingérable pour un grand nombre de ressources.

Le document CN116781431 propose une solution dans laquelle chaque appel API (acronyme de l'anglais 'Application Programming Interface', i.e. Interface de Programmation d'Application) est considéré comme un point de données, les différentes caractéristiques de l'appel API (valeur du trafic, temps, IP source, IP de destination, port de destination, fréquence, etc.) étant les dimensions de ce point. Une analyse par clustering vise à regrouper les points similaires ensemble et à déterminer un comportement "normal" pour un cluster. Il est envisagé d'appliquer cette solution de manière séparée sur différents aspects du trafic tels qu'API individuelles, comptes utilisateurs (en termes d'API appelées et de fréquence d'appel), paramètres des requêtes envoyées à chaque API (les données envoyées dans les requêtes comme les ID utilisateur, dates, montants, etc., selon la fonction de l'API), ce qui permet d'établir des références de comportement normal spécifiques à chacun de ces niveaux.

Malgré ses avancées, la solution selon CN116781431 présente toutefois plusieurs inconvénients. CN116781431 applique un clustering de points en considérant séparément des API, des comptes utilisateurs et des paramètres des requêtes. Cela peut révéler des tendances mais ne prend pas en compte les relations entre ces aspects, ni ne permet une prise en compte globale de l'hétérogénéité des comportements. Notamment des anomalies résultant de combinaisons spécifiques utilisateur/API peuvent ainsi passer inaperçues.

Par exemple, en considérant une application avec plusieurs API et de nombreux utilisateurs, chaque utilisateur peut avoir sa propre façon d'interagir avec chaque API :
- un utilisateur A appelle l'API 1 très fréquemment, mais n'utilise jamais l'API 2 ;
- un utilisateur B appelle l'API 1 et l'API 2, généralement de manière équilibrée, mais parfois l'API 2 de façon plus fréquente ;
- un utilisateur C appelle rarement l'API 1, mais quand il le fait, il envoie des paramètres inhabituels.

Ainsi :
- si l'utilisateur A commence soudainement à appeler l'API 2 fréquemment, c'est probablement anormal pour cet utilisateur, même si cela ne semble pas anormal pour l'API 2 en général, car l'utilisateur B la sollicite parfois fréquemment ;
- si l'utilisateur C appelle l'API 1 avec des paramètres inhabituels, c'est suspect, même si la fréquence d'appel semble normale pour cet utilisateur.

Ces anomalies spécifiques à certaines combinaisons utilisateur/API peuvent passer inaperçues, car elles ne semblent pas anormales quand on regarde chaque aspect isolément. La méthode offre en outre peu de flexibilité dans la granularité de l'analyse, se concentrant sur un seul aspect à la fois qui combine les trois paramètres : (API, compte, paramètre). Elle ne permet pas une surveillance à des niveaux intermédiaires tels que des groupes d'utilisateurs ou d'API aux usages similaires.

Il existe donc un besoin d'une solution de surveillance efficace pour détecter les anomalies et les utilisateurs malveillants, pour identifier les ressources vulnérables, et qui permette en outre d'optimiser la surveillance en fonction du contexte tout en s'adaptant aux différents besoins de sécurité et aux ressources de traitement disponibles pour effectuer cette surveillance.

### Résumé de l'invention :

A cet effet, suivant un premier aspect, la présente invention décrit un procédé de surveillance du trafic de données dans un système de communication entre des clients et des serveurs,
selon lequel dans une phase préalable, des groupes de clients et/ou des groupes de serveurs ayant été définis, et plusieurs modules distincts parmi des modules de détection automatique d'anomalies du trafic M1, M2, ..., M7, chaque module distinct Mi ayant été conçu, dans une phase préalable, en fonction de données d'observation du trafic d'une base d'historique correspondant spécifiquement à un seul type respectif Oi d'angles d'observation du trafic parmi les suivants :
   type O1 d'angle d'observation propre au trafic entre un unique client donné et un unique serveur donné, le module M1 étant adapté pour détecter des anomalies spécifiquement dans ce trafic ;
   type O2 d'angle d'observation propre au trafic entre un unique client donné et un groupe de serveurs donné, le module M2 étant adapté pour détecter des anomalies sélectivement dans ce trafic ;
   type O3 d'angle d'observation propre au trafic entre un unique client donné et l'ensemble des serveurs, le module M3 étant adapté pour détecter des anomalies spécifiquement dans ce trafic ;
   type O4 d'angle d'observation propre au trafic entre un unique groupe de clients donné et un unique serveur donné, le module M4 étant adapté pour détecter des anomalies sélectivement dans ce trafic ;
   type O5 d'angle d'observation propre au trafic entre l'ensemble des clients et un unique serveur donné, le module M5 étant adapté pour détecter des anomalies spécifiquement dans ce trafic ;
   type O6 d'angle d'observation propre au trafic entre un unique groupe de clients donné et un unique groupe de serveurs donné, le module M6 étant adapté pour détecter des anomalies spécifiquement dans ce trafic ;
   type O7 d'angle d'observation propre au trafic entre l'ensemble des clients donné et l'ensemble des serveurs donné, le module M7 étant adapté pour détecter des anomalies spécifiquement dans ce trafic ;
ledit procédé comprenant les étapes suivantes mises en œuvre par un dispositif électronique de surveillance du trafic des données, en phase opérationnelle :
   - collecter des données d'observation du trafic courant entre les clients et les serveurs ;
   - effectuer à l'aide d'un desdits modules distincts de détection automatique d'anomalies du trafic, nommé Mi, une analyse d'une partie au moins des données d'observation courantes collectées et correspondant spécifiquement au type Oi d'angle d'observation considéré ;
   - effectuer à l'aide d'un autre desdits modules distincts de détection automatique d'anomalies du trafic, Mj, j≠i, une analyse d'une partie au moins des données d'observation courantes collectées et correspondant spécifiquement au type Oj d'angle d'observation considéré.

L'invention offre ainsi une solution permettant, dans un écosystème client-serveur, de surveiller les interactions entre clients et serveurs. Elle est basée sur des angles d'observation, qui sont définis comme des perspectives analytiques spécifiques dans l'analyse des données. Ces angles d'observation varient d'une vue plus globale, couvrant par exemple l'ensemble du réseau, jusqu'à une vue plus détaillée, ciblant des interactions spécifiques entre clients et serveurs. Ils sont configurés en se basant sur des clusters de clients et de serveurs présentant des comportements et des caractéristiques similaires. Pour chaque angle, un modèle de détection d'anomalies dédié est obtenu. Le dispositif de surveillance peut par exemple basculer dynamiquement d'un angle à l'autre en fonction du contexte et des besoins, offrant ainsi une surveillance adaptative et optimisée. L'approche proposée permet de détecter efficacement différents types d'anomalies et d'attaques, tout en permettant le cas échéant de s'adapter au contexte, notamment aux ressources de traitement disponibles pour implémenter la surveillance et au niveau de sécurité requis, de concentrer les efforts de surveillance sur les éléments les plus critiques.

Dans des modes de réalisation, un tel procédé comprendra en outre l'une au moins des caractéristiques suivantes :
- l'analyse par le module Mj de détection automatique d'anomalies du trafic correspondant spécifiquement au type Oj d'angle d'observation considéré est déclenchée à l'issue d'une première période d'analyse par le module Mi de détection automatique d'anomalies du trafic correspondant spécifiquement au type Oi d'angle d'observation ;
- ledit déclenchement est effectué en fonction de l'un au moins des événements parmi :
   - une anomalie détectée par le module Mi ;
   - une variation de la disponibilité des ressources de traitement disponibles pour implémenter la surveillance du trafic ;
   - une variation d'un volume de trafic à surveiller ;
   - une variation du niveau de sécurité requis dans le système ;
- N groupes de clients ayant été définis et M groupes de serveurs ayant été définis, lesdits modules distincts de détection automatique comportent au moins N x M modules M6 de type O6 d'angle d'observation propre au trafic entre un unique groupe de clients donné parmi les N groupes de clients et un unique groupe de serveurs donné parmi les M groupes de serveurs, dans lequel le (t+k)^{ème} module M6, nommé M6k est adapté pour détecter une anomalie sélectivement entre le t^{ème} groupe de clients donné, t = 1 à N, et le k^{ème} groupe de serveurs donné parmi les M groupes de serveurs, k = 1 à M ;
- lesdits modules distincts de détection automatique comportent en outre au moins un module M7 de détection automatique d'anomalies du trafic, i = 7, correspondant au type O7 d'angle d'observation propre au trafic entre l'ensemble des clients donné et l'ensemble des serveurs donné ;
- les données d'observation courantes fournies en entrée des modules distincts sont relatives à un intervalle temporel commun et une anomalie est déterminée présente ou non en fonction desdits résultats de détection fournis sur ledit intervalle temporel commun par les modules distincts ;
- les groupes de clients sont déterminés en fonction de vecteurs de statistiques descriptives calculées pour chaque client à partir des données d'observation du trafic de base d'historique, et caractérisant son comportement ; et les groupes de serveurs sont déterminés en fonction de vecteurs de statistiques descriptives calculées pour chaque serveur à partir des données d'observation du trafic de base d'historique caractérisant la façon dont ils sont sollicités par les clients.

Suivant un autre aspect, l'invention décrit un dispositif de surveillance du trafic de données dans un système de communication entre des clients et des serveurs, selon lequel, des groupes de clients et/ou des groupes de serveurs ayant été définis, ledit dispositif de surveillance comprend plusieurs modules distincts parmi des modules de détection automatique d'anomalies du trafic M1, M2, ..., M7, chaque module distinct Mi ayant été conçu, dans une phase préalable, en fonction de données d'observation du trafic d'une base d'historique correspondant spécifiquement à un seul type respectif Oi d'angles d'observation du trafic parmi les suivants :
type O1 d'angle d'observation propre au trafic entre un unique client donné et un unique serveur donné, le module M1 étant adapté pour détecter des anomalies spécifiquement dans ce trafic ;
type O2 d'angle d'observation propre au trafic entre un unique client donné et un groupe de serveurs donné, le module M2 étant adapté pour détecter des anomalies sélectivement dans ce trafic ;
type O3 d'angle d'observation propre au trafic entre un unique client donné et l'ensemble des serveurs, le module M3 étant adapté pour détecter des anomalies spécifiquement dans ce trafic ;
type O4 d'angle d'observation propre au trafic entre un unique groupe de clients donné et un unique serveur donné, le module M4 étant adapté pour détecter des anomalies sélectivement dans ce trafic ;
type O5 d'angle d'observation propre au trafic entre l'ensemble des clients et un unique serveur donné, le module M5 étant adapté pour détecter des anomalies spécifiquement dans ce trafic ;
type O6 d'angle d'observation propre au trafic entre un unique groupe de clients donné et un unique groupe de serveurs donné, le module M6 étant adapté pour détecter des anomalies spécifiquement dans ce trafic ;
type O7 d'angle d'observation propre au trafic entre l'ensemble des clients donné et l'ensemble des serveurs donné, le module M7 étant adapté pour détecter des anomalies spécifiquement dans ce trafic ;

dans lequel ledit dispositif électronique de surveillance du trafic des données est adapté pour collecter des données d'observation du trafic courant entre les clients et les serveurs ;
ledit dispositif électronique de surveillance du trafic des données est adapté pour effectuer à l'aide d'un desdits modules distincts de détection automatique d'anomalies du trafic, nommé Mi, une analyse d'une partie au moins des données d'observation courantes collectées et correspondant spécifiquement au type Oi d'angle d'observation considéré ;
ledit dispositif électronique de surveillance du trafic des données est adapté pour effectuer à l'aide d'un autre desdits modules distincts de détection automatique d'anomalies du trafic, Mj, j≠i, une analyse d'une partie au moins des données d'observation courantes collectées et correspondant spécifiquement au type Oj d'angle d'observation considéré.

Dans des modes de réalisation, un tel dispositif est adapté pour déclencher l'analyse par le module Mj de détection automatique d'anomalies du trafic correspondant spécifiquement au type Oj d'angle d'observation considéré à l'issue d'une première période d'analyse par le module Mi de détection automatique d'anomalies du trafic correspondant spécifiquement au type Oi d'angle d'observation.

Suivant un autre aspect, l'invention décrit un produit programme d'ordinateur destiné à être stocké dans la mémoire d'un dispositif de surveillance de trafic et comprenant en outre un microcalculateur, ledit programme d'ordinateur comprenant des instructions qui, lorsqu'elles sont exécutées sur le microcalculateur, mettent en œuvre les étapes d'un procédé suivant le premier aspect de l'invention.

L'invention décrit également un support d'enregistrement lisible par ordinateur stockant un tel programme d'ordinateur. De tels supports d'enregistrement peuvent comporter un moyen de stockage, tel qu'une ROM, par exemple un CD ROM ou une ROM de circuit microélectronique, ou encore un moyen d'enregistrement magnétique, par exemple une clé USB ou un disque dur. De tels supports d'enregistrement peuvent être des supports transmissibles tel qu'un signal électrique ou optique, qui peut être acheminé via un câble électrique ou optique, par radio ou par d'autres moyens, de sorte que le programme d'ordinateur qu'il contient est exécutable à distance. Les programmes selon l'invention peuvent être en particulier téléchargés sur un réseau par exemple le réseau Internet. De tels supports d'enregistrement peuvent comprendre un circuit intégré dans lequel le programme est incorporé, le circuit étant adapté pour exécuter ou pour être utilisé dans l'exécution du procédé de contrôle d'affichage précité.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple.
[Fig. 1] La figure 1 représente schématiquement un système de communication de données implémentant une solution de surveillance du trafic dans un mode de réalisation de l'invention ;
[Fig. 2] La figure 2 est un organigramme des étapes d'un procédé de détection d'anomalies dans un mode de réalisation de l'invention ;
[Fig. 3] La figure 3 représente les logs pris en compte dans un échantillon dans un exemple de réalisation de l'invention.

Des références identiques peuvent être utilisées dans des figures différentes lorsqu'elles désignent des éléments identiques ou comparables.

### Description détaillée :

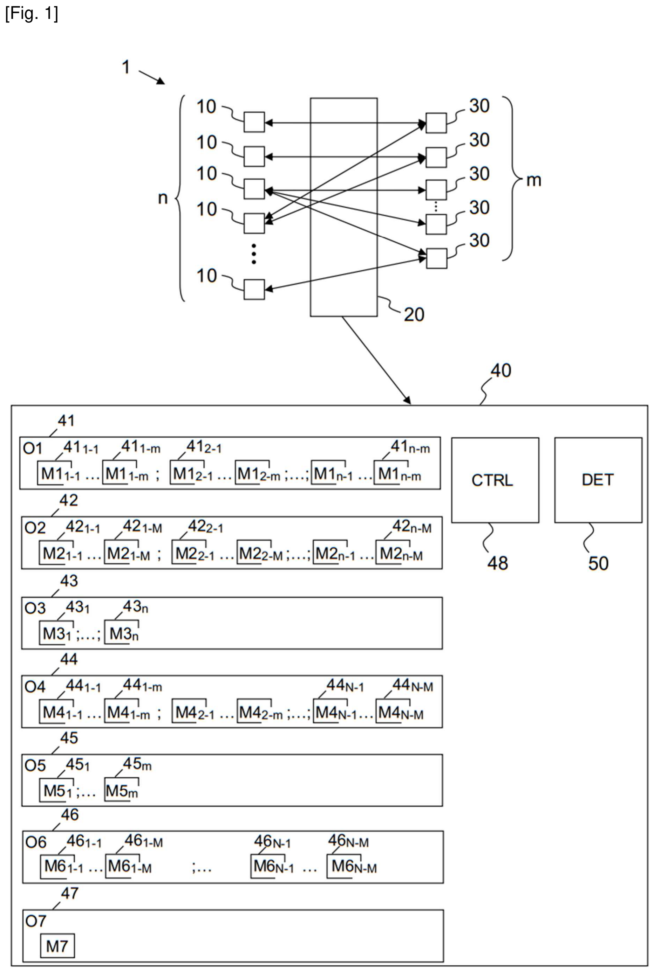

Il est considéré à titre d'exemple, dans un mode de réalisation de l'invention, un système de communication 1 représenté en figure 1, de type clients/serveurs, comportant un ensemble de n clients, qui sont des applications logicielles 10 hébergées (et s'exécutant dans) dans un ou des terminaux utilisateurs électroniques tels que téléphones mobiles, ordinateurs ... et adaptés pour permettre la consultation, par leurs utilisateurs des terminaux, des ressources mises à disposition sur des serveurs (n typiquement est égal ou supérieur à 1, par exemple supérieur à 2). La solution de surveillance proposée peut bien sûr être appliquée de manière générale à toutes les communications entre clients et serveurs, au-delà du contexte spécifique des API, mais pour illustrer son application, nous prendrons l'exemple d'une API (Interface de Programmation d'Application) de réservations en ligne d'hôtel offrant des services de consultation des disponibilités de chambres d'hôtels, de réservation de chambres, de paiement de réservations, d'annulation/modification des réservations.

Certains des terminaux utilisateurs, et donc les applications clientes sur ces terminaux, sont utilisés par des particuliers, d'autres par des agences de voyage, d'autres encore des partenaires commerciaux.

Une API est un ensemble de règles, de protocoles et d'outils permettant la communication entre différents systèmes informatiques. Elle définit les types de requêtes et les formats de données utilisés pour échanger des informations entre un client (tel qu'une application logicielle 10, de type application web ou mobile d'un terminal utilisateur) et un serveur.

Les applications clientes 10 sont ainsi adaptées pour échanger avec, par exemple un ensemble de m points d'entrée 30 (nommés aussi « endpoint » (point d'extrémité) de l'API du système de réservation d'hôtels (m typiquement est égal ou supérieur à 1, par exemple supérieur à 2). Les endpoints sont les points d'entrée spécifiques de l'API, et sont accessibles via des URL respectives.

Chaque endpoint est identifié par une URL, correspond à une fonctionnalité particulière et accepte des requêtes HTTP (GET, POST, PUT, DELETE, etc.) pour effectuer des actions associées sur des ressources de serveurs qui sont affectées à ces actions.

### Voici quelques exemples d'endpoints de l'API :

### Endpoints de recherche d'hôtels :

GET /api/hotels/search : recherche générale d'hôtels
GET /api/hotels/search/by-location : recherche d'hôtels par localisation
GET /api/hotels/search/by-rating : recherche d'hôtels par note

### Endpoints de création de réservation :

POST /api/reservations : créer une nouvelle réservation
POST /api/reservations/group : créer une réservation pour un groupe

### Endpoints de modification de réservation :

PUT /api/reservations : modifier une réservation existante
PUT /api/reservations/{reservation_id}/add-room : ajouter une chambre à une réservation

Les communications considérées ici sont les requêtes transmises, depuis les applications clientes 10 s'exécutant dans les terminaux utilisateurs, à destination des endpoints 30, ainsi que les réponses à ces requêtes effectuées par ces derniers via des serveurs. Elles sont effectuées sur des réseaux de communication comportant des liaisons de transport qui peuvent être de nature diverse : filaire, sans fil de type RadioFréquence ou autre. Les données échangées transitent par un module passerelle 20, dans le cas considéré de type passerelle API, qui analyse ce trafic de données, en déduit des données d'observations du trafic et les transmet à un dispositif de surveillance du trafic 40.

Deux objectifs principaux sont visés par la surveillance opérée par le dispositif de surveillance du trafic 40 :
- surveiller les comportements des applications clientes afin de détecter les anomalies et identifier les applications 'clientes'/utilisateurs malveillants ;
- surveiller la manière dont les endpoints sont sollicitées par les utilisateurs pour identifier les endpoints vulnérables et mieux les sécuriser.

Dans le cas considéré, le dispositif de surveillance 40 est un dispositif électronique comportant notamment un module électronique de contrôle 48 et un module électronique de détermination des modules de détection 50.

Ces données d'observations, qui décrivent les données de trafic échangées, comportent par exemple, dans le cas considéré, les logs enregistrant les requêtes entre utilisateurs et ressources. Dans des modes de réalisations, les données d'observation comportent, à la place, des paquets IP circulant sur le réseau, ou encore tout autre type de données décrivant les communications.

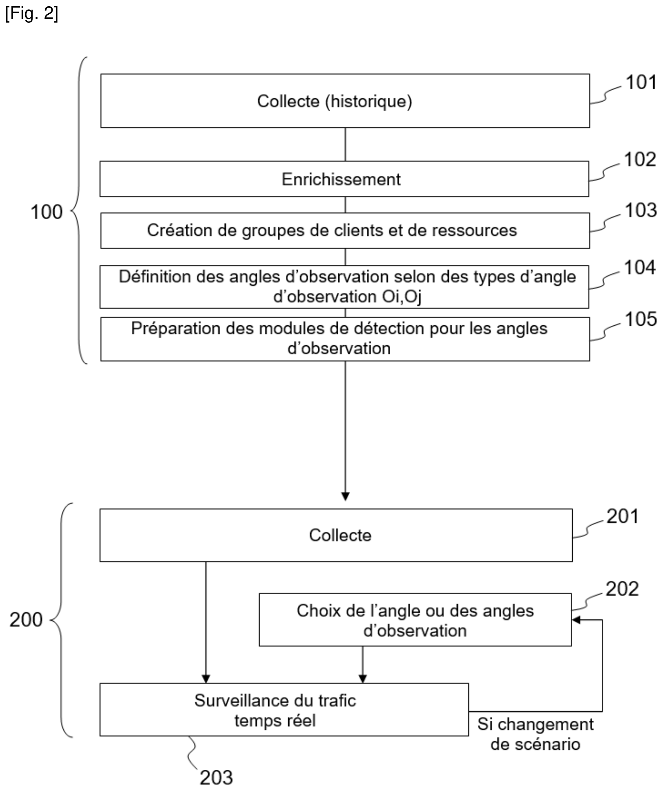

La figure 2 représente les étapes d'un procédé de détection d'anomalies dans les communications mises en œuvre par exemple dans le système de communication 1 dans un mode de réalisation de l'invention. Ce procédé comporte deux phases : une phase préalable 100 et une phase de mise en production 200, détaillées toutes deux ci-dessous.

### Phase préalable

L'objectif principal de cette phase préalable 100 est de :
- définir des angles d'observation des échanges à surveiller, comprenant également la création de groupes (« clusters ») des applications 'clientes' 10 ayant des comportements similaires et de groupes (« clusters ») d'endpoints sollicités de la même manière, et
- préparer des solutions de sécurité par angle d'observation défini.

La phase préalable 100 comporte une étape 101 de collecte, par le module de contrôle 48 des données décrivant les communications et fournies par la passerelle 20. Cette collecte est effectuée par exemple en temps réel depuis le réseau ou bien en différé, depuis une base d'historique enregistré.

Dans le cas considéré où ces données sont sous forme de journaux (de type logs) qui enregistrent les interactions, les informations spécifiques varient selon la méthode de logging employée, mais certains champs essentiels sont généralement présents, parmi lesquels les champs suivants :
- « Timestamp » : horodatage de la requête ;
- « Méthode http » : type de la requête (GET, POST, etc.) ;
- « Code statut http » : réponse du serveur (200, 404, etc.) ;
- « Durée de la requête » : temps pris par le serveur pour compléter la requête ;
- « Adresse IP du client » : adresse IP identifiant. le terminal utilisateur hébergeant l'application d'où provient la requête ;
- « User-agent » : informations sur le navigateur ou l'outil utilisé par le client ;
- « Géolocalisation » : localisation géographique du terminal utilisateur hébergeant l'application d'où provient la requête ; ;
- « Client ID » : identifiant unique pour chaque application cliente ;
- « Request ID » : identifiant de la requête ;
- URL de l'endpoint demandé, identifiant cet endpoint.

Des exemples de logs et du contenu de ces champs figurent dans le tableau qui suit dans lequel chaque ligne représente un enregistrement et les colonnes contiennent les informations extraites de chaque interaction.

**[Table 1]**

| Timestamp | Méthode HTTP | Code statut HTTP | Durée requête | IP client | User-agent | Géolocalisation | Client ID | URL (Endpoint) | Request ID |
|---|---|---|---|---|---|---|---|---|---|
| 1622146800 | GET | 200 | 250ms | 192.168.1.10 | Chrome/90.0 | Paris, FR | user123 | lapi/ressource1 | req_abcdef123456 |
| 1622146805 | POST | 201 | 400ms | 192.168.1.11 | Firefox/88.0 | Lyon, FR | user456 | Api/ressource2 | req_Imnop345678 |

Dans le cas de l'utilisation de paquets IP, les champs de l'en-tête exploitables incluent :
- Adresses IP source et destination
- Numéros de port source et destination
- Protocole (TCP, UDP, ICMP...)
- Taille du paquet
- Flags (SYN, ACK, FIN...)
- TTL (Time-to-Live).

D'autres informations peuvent être extraites du payload (des données de « charge utile », i.e. les données à transmettre, pas les données d'en-tête, ni de contrôle, ni les metadata) s'il est non chiffré. De plus, dans un mode de réalisation, le temps de capture est enregistré au moment de la capture du paquet, ce qui est utile notamment quand l'en-tête du paquet ne comporte pas de champ d'horodatage.

Toujours en référence à la figure 2, dans une étape 102 optionnelle mise en œuvre par le module de contrôle 48, ces données d'observation sont pré-traitées et enrichies à l'aide d'informations d'expertise métier par exemple, en ajoutant des champs tels que :
- fonction de l'endpoint 30 (par exemple dans le cas du service considéré ici : recherche, réservation...)
- rôle de l'utilisateur du terminal utilisateur 10 (ici par exemple particulier, agence...)
- famille de méthode HTTP : lire (GET, HEAD), écrire (POST, PUT), et effacer (DELETE) ...
- famille de code statut (succès, erreur client, erreur serveur...) indiquée par le premier chiffre du code statut (2xx pour succès, 4xx pour erreur client, 5xx pour erreur serveur).

Des exemples de logs enrichis figurent dans le tableau qui suit.

**[Table 2]**

| Times tamp | Méthode HTT P | Code statut HT TP | Durée requête | IP client | User-agent | Géolocalisation | Client ID | Request ID | Endpoint-URL | Fonction endpoi nt | Rôle utilisateur | Famille méthode | Famille statut |
|---|---|---|---|---|---|---|---|---|---|---|---|---|---|
| 16221 46800 | GET | 20 0 | 250 ms | 192.16 8.1.10 | Chrom e/90.0 | Paris, FR | use r12 3 | req_abcd ef123456 | https://plmlatex.math.cnrs.fr /1544293832yzfvbvfyrynr | Reche rche d'hôtels | individ ual | Lire | Suc cès |
| 16221 46805 | PO ST | 20 1 | 400 ms | 192.16 8.1.11 | Firefox 188.0 | Lyon, FR | use r45 6 | req_ghijk 789012 | /api/bookings | Réser vation s | travel Agenc y | Écrire | Suc cès |

Dans une étape 103, le bloc de détermination 50 définit ensuite des groupes de clients 10 et des groupes d'endpoints 30.

Dans un mode de réalisation possible, les groupes côté clients sont définis en fonction du rôle utilisateur et les groupes côté serveur sont constitués en fonction de la fonction d'endpoint.

Dans le mode de réalisation décrit ci-après toutefois, les groupes côté client regroupant entre eux les clients (i.e. les applications) 10 ayant des comportements similaires et les groupes côté serveur regroupant entre eux les endpoints sollicités de la même manière sont définis chacun en exploitant les données d'observation collectées à l'étape 101, éventuellement enrichies.

Pour déterminer les groupes, une méthode basée sur les séries temporelles est présentée ci-dessous, mais d'autres approches sont possibles, telles que l'utilisation de statistiques calculées directement sur l'ensemble des interactions (nombre total d'interactions, nombre de ressources sollicitées, diversité des requêtes), l'application de techniques de réduction de dimensionnalité (ACP, t-SNE), le clustering basé sur la densité (DBSCAN), etc.

Pour déterminer les groupes côté client, les logs sont séparés par identifiant client, créant une mini-base de données par client. Des échantillons sont ensuite créés, en regroupant les logs par intervalles (ex : par intervalles de 10 secondes). Chaque échantillon est ensuite caractérisé par des statistiques descriptives (fréquence, ratio, diversité, mesures de tendance centrale et de dispersion) calculées sur un ou plusieurs champs des logs indépendamment des url destinataires. Ces mesures sont rassemblées en une série temporelle multidimensionnelle décrivant le comportement du client au fil du temps.

Exemple de vecteur représentant un échantillon pour un client:
[nb_requetes_10s: 5, ratio_GET_10s: 0.8, ratio_POST_10s: 0.2, diversite_endpoints_10s: 3]

Des algorithmes de classification de séries temporelles ( de type K-means, DBSCAN, OPTICS, ...) sont ensuite utilisés pour créer des groupes de clients 10 à partir de ces séries temporelles de vecteurs.

Un processus similaire est appliqué relativement aux endpoints, en séparant les logs par identifiant de ressource (URL) à la place de les séparer par client ID, pour créer des groupes d'endpoints 30 cette fois (sans tenir compte, dans le calcul des statistiques, des clients d'origine).

A titre d'exemple, il est considéré ici que N groupes de clients 10 et que M groupes de endpoints 30 ont été créés (dans un mode de réalisation, chaque client ne faisant partie que d'un seul groupe et chaque endpoint ne faisant partie que d'un seul groupe).

Le résultat du clustering basé sur les données observées peut différer d'un clustering, par exemple initial, basé uniquement sur l'expertise métier. En effet, l'analyse des données réelles peut révéler des similitudes ou des différences de comportement qui n'étaient pas évidentes a priori. Par exemple, deux clients considérés comme distincts par l'expertise métier pourraient en réalité avoir un comportement très similaire sur le système. Inversement, des clients regroupés dans une même catégorie métier pourraient présenter des schémas d'utilisation très différents. La prise en compte des données observées pour ces constitutions de groupes permet donc d'affiner et de corriger la vision initiale des clusters de clients et des clusters d'endpoints.

Dans une étape 104, le bloc de détermination 50 sélectionne la liste L_{Angl-obs} de celui ou de ceux des angles d'observation qui seront utilisables lors de la phase opérationnelle, de façon ponctuelle ou continue. Cette sélection est fonction par exemple des niveaux de sécurité souhaités ou encore de contraintes sur les ressources de traitement (processeur, mémoire) qui seront disponibles pour la surveillance.

Ci-après les différents types d'angle d'observation sont décrits, chacun comportant ses avantages et ses inconvénients, et permettant de détecter plus ou moins efficacement certains types d'attaques et d'anomalies. La notion d'angle d'observation définit ce que l'on souhaite surveiller en détail et avec précision dans un système, car bien qu'observer toutes les interactions entre les terminaux utilisateurs et les ressources (ici les endpoints), puis effectuer des statistiques pour détecter les anomalies puisse sembler intéressant, cette approche reste grossière et peut engendrer plusieurs problèmes.

### Type d'angle d'observation O1 : un client <-> un endpoint

En considérant un client donné parmi les n clients et un endpoint donné parmi les m endpoints, ce type d'angle d'observation O1 focalise l'observation sur « comment ce client (de type application) interagit avec cet endpoint ». Cet angle d'observation permet une surveillance très fine et détaillée des interactions de ce client avec cette ressource. Il facilite la détection d'anomalies spécifiques à un client ou à une ressource, comme des tentatives d'injection SQL ou des attaques par force brute. Cependant, il peut être très coûteux en ressources et en temps de calcul, surtout pour un grand nombre de clients et de ressources.

Il existe donc dans le cas présent n*m angles d'observation possibles de type O1 ; ils peuvent être tous sélectionnés à l'étape 104 ou alors seulement un ou certains d'entre eux (voire aucun quand le type d'angle d'observation O1 n'est pas souhaité).

### Type d'angle d'observation O2 : un client <-> un groupe d'endpoints

Dans un angle d'observation de type O2, il est observé spécifiquement comment un client donné interagit avec un groupe d'endpoints donné. Cela permet une surveillance plus ciblée des interactions de ce client avec un groupe de ressources spécifique, comme les endpoints liés à l'authentification ou aux paiements. Toutefois, il est moins précis que O1.

Il existe donc dans le cas présent n*M angles d'observation possibles de type O2 ; ils peuvent être tous sélectionnés à l'étape 104 ou alors un ou seulement certains d'entre eux (voire aucun quand le type d'angle d'observation O2 n'est pas souhaité).

### Type d'angle d'observation O3 : un client <-> l'ensemble des endpoints

Dans un angle d'observation de type O3, il est observé spécifiquement comment un client donné interagit avec l'ensemble des endpoints confondus. Cette approche permet d'avoir une vue d'ensemble du comportement d'un client sur le système, ce qui facilite la détection d'anomalies globales. Néanmoins, elle est moins précise que O1 et O2, et peut manquer des anomalies spécifiques à certains endpoints.

Il existe donc dans le cas présent n angles d'observation possibles de type O3 ; ils peuvent être tous sélectionnés à l'étape 104 ou alors seulement certains d'entre eux (voire aucun quand le type d'angle d'observation O3 n'est pas souhaité).

### Type d'angle d'observation O4 : un groupe de clients <-> un endpoint

Dans un angle d'observation de type O4, il est observé spécifiquement comment un groupe donné de clients interagit avec un endpoint donné. Ce type d'angle d'observation O4 permet d'identifier les endpoints les plus sollicités par un groupe de clients (ou plusieurs groupes de clients) et de détecter des schémas d'utilisation anormaux. Par exemple, si un groupe de clients ayant un rôle limité dans le système commence soudainement à accéder de manière intensive à un endpoint spécifique, cela peut indiquer une tentative d'accès non autorisé ou une faille de sécurité exploitée par ce groupe. Elle est moins précise que O1, mais plus orientée vers la protection des ressources que O2 et O3 (plus que l'identification d'utilisateurs malicieux).

Il existe donc dans le cas présent N*m angles d'observation possibles de type O4 ; ils peuvent être tous sélectionnés à l'étape 104 ou alors seulement certains d'entre eux(voire aucun quand le type d'angle d'observation O4 n'est pas souhaité).

### Type d'angle d'observation O5 : l'ensemble des clients <-> un endpoint

Dans un angle d'observation de type O5, il est observé spécifiquement comment tous les clients, confondus, interagissent avec un endpoint donné. Cela permet d'avoir une vue d'ensemble de l'utilisation de chaque ressource par l'ensemble des clients et facilite la détection d'anomalies globales, comme une augmentation soudaine du nombre de requêtes sur un endpoint spécifique, pouvant indiquer une attaque ciblée. Cependant, elle peut manquer des anomalies spécifiques à certains clients (et utilisateurs) ou groupes de clients, car elle est moins précise que O4.

Il existe donc dans le cas présent m angles d'observation possibles de type O5 ; ils peuvent être tous sélectionnés à l'étape 104 ou alors seulement un ou certains d'entre eux (voire aucun quand le type d'angle d'observation O5 n'est pas souhaité).

### Type d'angle d'observation O6 : un groupe de clients <-> un groupe d'endpoints

Dans un angle d'observation de type O6, il est observé spécifiquement comment un groupe donné de clients interagit avec un groupe donné d'endpoints. Ce type d'angle d'observation offre un bon compromis entre la granularité et la performance, en se concentrant sur des ensembles cohérents de clients (et donc d'utilisateurs par exemple) et d'endpoints.

Il existe donc dans le cas présent N*M angles d'observation possibles de type O6 ; ils peuvent être tous sélectionnés à l'étape 104 ou alors seulement un ou certains d'entre eux (voire aucun quand le type d'angle d'observation O6 n'est pas souhaité).

### Type d'angle d'observation O7 : l'ensemble des clients <-> l'ensemble des endpoints

Dans l'angle d'observation de type O7, il est observé comment l'ensemble des clients interagissent avec tous les endpoints confondus. Cette méthode permet d'avoir une vue d'ensemble du comportement global du système et facilite la détection d'anomalies générales, comme les attaques par déni de service. Cependant, elle peut manquer de nombreuses anomalies spécifiques à certains clients, groupes de clients, endpoints ou groupes d'endpoints.

Il existe donc 1 seul angle d'observation de type O7, qui est sélectionné ou non l'étape 104 suivant si le type d'angle d'observation O7 est souhaité ou non).

Dans l'exemple considéré ici, il est sélectionné, à l'étape 104, tous les angles d'observation de chaque type O1, O2, ..., O7.

Dans une étape 105, pour chacun des angles d'observation sélectionnés, le bloc de détermination 50 conçoit un module de détection d'anomalies spécifiquement adapté à cet angle d'observation, en fonction de données d'observation collectées à l'étape 101 et correspondant spécifiquement audit angle d'observation respectif. Ces modèles de détection dédiés permettent de caractériser finement le comportement normal, d'apprendre des motifs d'usage subtils et détecter efficacement les déviations, minimisant ainsi les fausses alertes.

Pour créer un tel module de détection, il est constitué une base de données d'observation spécifique à chaque angle d'observation. Les données relatives aux clients et endpoints ne faisant pas partie de l'angle d'observation n'y figurent pas.

Typiquement des échantillons de données sont créés à partir spécifiquement des données d'observation de la base de données spécifiques, en regroupant dans un échantillon les logs par intervalle temporel (ex : par intervalles de 10 secondes). Chaque échantillon est ensuite caractérisé par des statistiques descriptives (fréquence, ratio, diversité, mesures de tendance centrale et de dispersion) calculées sur un ou plusieurs champs des logs. Ces vecteurs de mesures sont rassemblés en une série temporelle multidimensionnelle décrivant le comportement au fil du temps, d'une interaction de, soit un client avec un endpoint (O1), ou d'un client avec un groupe d'endpoints (O2), ou d'un client avec tous les endpoints (O3), ou d'un groupe de clients avec un endpoint (O4), ou de tous les clients avec un endpoint (O5), ou d'un groupe de clients avec un groupe d'endpoints (O6), ou de tous les clients avec tous les endpoints O7 .

Dans le cas d'une base spécifique à un angle d'observation de type O4 (un groupe de clients <-> un endpoint), un échantillon regroupera les logs de plusieurs clients dudit groupe et du seul endpoint. Dans le cas d'une base spécifique à un angle d'observation de type O2 (un client <-> un groupe d'endpoint), un échantillon regroupera des logs relatifs audit seul client, mais à plusieurs endpoints dudit groupe d'endpoints.

Et le module de détection spécifiquement adapté à un angle d'observation est créé à partir de la base de données d'observation spécifiquement constituée, typiquement à partir des vecteurs de caractéristiques statistiques. Il existe différentes techniques pour concevoir le module de détection, suivant notamment la méthode de détection retenue : intelligence artificielle, statistiques, règles expertes, etc.). Si la méthode utilisée pour distinguer entre un comportement normal et anormal est basée sur l'IA (Intelligence Artificielle), cette phase comprendra l'apprentissage d'un modèle par angle, à partir de la base de données spécifique. Si elle repose sur la détection de signatures, il sera nécessaire de définir ces signatures, à partir de la base de données spécifique Ceci impliquera par exemple l'identification de seuils statistiques caractérisant le comportement normal (par exemple, seuil du nombre de requêtes par échantillon, etc.). Ces seuils serviront à détecter les écarts significatifs pouvant indiquer une activité anormale.

Si l'IA est utilisée comme solution pour distinguer le comportement normal du comportement suspect, il s'agit ici de préparer les modèles IA adaptés à chaque angle d'observation. Les vecteurs de caractéristiques statistiques issus des données d'observation de la base de données spécifique à chaque angle sont exploités pour entraîner et valider ces modèles de surveillance.

Dans un tel cas, pour chaque angle d'observation considéré, le module de détermination 50 est adapté pour exécuter un algorithme d'apprentissage automatique, supervisé ou non, d'un modèle d'intelligence artificielle qui, pour un vecteur de caractéristiques quelconque de l'ensemble de vecteurs de caractéristiques caractérisant une fenêtre d'observation de taille fixée, apprend au modèle à déterminer si le trafic observé sur cette fenêtre comporte une anomalie. La détection d'anomalies est par exemple formulée comme un problème de classification.

Dans ce qui suit, quelques recommandations sont proposées et des exemples sont décrits, pour préparer les modèles IA.

### O1 : un client <-> un endpoint

Pour ce couple client-ressource, un modèle IA peut être conçu pour apprendre les caractéristiques de cette interaction et détecter les anomalies. Il est recommandé que ce modèle soit cohérent avec la méthode utilisée pour la création des clusters, assurant ainsi une continuité dans l'analyse.

Les logs concernant le couple client-ressource sont exploités et regroupés en échantillons à un intervalle régulier, par exemple toutes les 10 secondes. Chaque échantillon est décrit par des caractéristiques statistiques calculées à partir de tout ou partie des champs des logs, comme le nombre de requêtes entre le client et l'endpoint sur cet intervalle.

Ces échantillons sont ensuite agrégés en séries temporelles d'une durée choisie, par exemple une minute, retraçant l'évolution du nombre de sollicitations entre ce client et cet endpoint. Un modèle IA, supervisé ou non selon les données disponibles, est alors entraîné sur ces séries temporelles pour apprendre à reconnaître les motifs d'interaction normaux et détecter les anomalies.

### O2 : un client <-> un groupe d'endpoints et O3 : un client <-> l'ensemble des endpoints

Pour ces angles, l'approche est similaire à celle de O1, mais avec une attention particulière portée à la manière dont un client interagit avec plusieurs endpoints (ceux du groupe) ou avec l'ensemble des endpoints. Les modèles de surveillance devraient tenir compte non seulement du volume d'interactions, mais aussi de la diversité des endpoints impliqués, ce qui peut indiquer des schémas d'utilisation spécifiques ou des comportements anormaux.

Ainsi, dans un mode de réalisation, de façon similaire à O1, des échantillons sont créées à intervalle régulier, par exemple toutes les 10 secondes. Chaque échantillon est décrit par des statistiques sur le nombre d'endpoints sollicités, leur diversité, et la diversité de leurs fonctions. Ces caractéristiques permettent de capturer des informations plus riches sur les interactions entre le client et le groupe d'endpoints.

À partir de ces échantillons, des séries temporelles sont créées. Ces séries temporelles représentent l'évolution des caractéristiques des interactions au fil du temps. Un modèle d'IA est alors entraîné sur ces séries temporelles pour apprendre les motifs normaux d'interaction entre le client et le groupe d'endpoints. Une fois entraîné, le modèle est capable d'identifier les anomalies qui s'écartent de ces motifs normaux.

### O4 : un groupe de clients <-> un endpoint et O5 : l'ensemble des clients <-> un endpoint

Ces angles d'observation examinent chacun comment un endpoint donné est sollicité par un groupe donné de clients (O4) ou par l'ensemble des clients (O5). Pour analyser ces interactions de manière approfondie, il est crucial de prendre en compte non seulement les métriques classiques comme le nombre total de requêtes et la diversité des méthodes HTTP utilisées, mais également des caractéristiques détaillées des clients.

Ainsi, après l'échantillonnage, la description de chaque échantillon considéré relativement à 'un groupe de clients <-> un endpoint' (et idem pour chaque échantillon considéré relativement à 'l'ensemble des clients <-> un endpoint') devrait inclure des statistiques sur les clients qui ont sollicité l'endpoint en question, telles que leur nombre, leurs rôles, leur diversité, etc., en plus des métriques classiques utilisées dans O1. Ces échantillons sont ensuite agrégés en séries temporelles, pour mieux observer les tendances et les modèles d'interaction.

### O6 : un groupe de clients <-> un groupe d'endpoints et O7 : l'ensemble des clients <-> ensemble des endpoints

Pour ces angles de vue, il est essentiel de prendre en compte à la fois les caractéristiques des clients (diversité, nombre, etc.) et des endpoints (fonction, diversité) lors de la description des échantillons. Cette approche devrait permettre de caractériser avec précision les interactions entre chaque couple formé par un groupe d'endpoints et un groupe de clients, ainsi que les interactions entre tous les clients et tous les endpoints.

Le nombre de modèles de détection à concevoir (égal au nombre de bases de données spécifiques à créer) dépend de l'angle d'observation choisi, du nombre de clients et endpoints, ainsi que du nombre de groupes d'endpoints et clients crées. Voici deux exemples pour illustrer cela :
Exemple 1 : n = 5 clients (répartis en N = 2 groupes) et m = 20 endpoints (répartis en M = 5 groupes).

**[Table 3]**

| **Type angle d'observation** | **Description** | **Nombre de Modèles** |
|---|---|---|
| O1 | Chaque client<-> chaque endpoint | 100 modèles |
| O2 | Chaque client<-> chaque groupe d'endpoint | 25 modèles |
| O3 | Chaque client<-> tous les endpoints | 5 modèles |
| O4 | Chaque groupe de clients<-> chaque endpoint | 40 modèles |
| O5 | Tous les clients<-> chaque endpoint | 20 modèles |
| O6 | Chaque groupe de clients<-> chaque groupe d'endpoints | 10 modèles |
| O7 | Tous les clients<-> tous les endpoints | 1 modèle |

A l'issue de l'étape 105, les modules de détection d'anomalie pour chaque angle d'observation sélectionné à l'étape 104, sont obtenus et sont incorporés au module de surveillance 40.

Dans le cas présent, en référence à la figure 1, le module de surveillance 40 comporte ainsi :
- un bloc 41 de n*m modules de détection de type O1, dans lequel le module de détection 41i₋ⱼ implémente le modèle M1ᵢ₋ⱼ i = 1 à n et j = 1 à m, et est adapté pour détecter spécifiquement les anomalies entre le i^{ème} client et le j^{ème} endpoint ;
- un bloc 42 de n*M modules de détection de type O2, dans lequel le module de détection 42ᵢ₋ⱼ implémente le modèle M2ᵢ₋ⱼ i = 1 à n et j = 1 à M, et est adapté pour détecter spécifiquement les anomalies entre le i^{ème} client et le j^{ème} groupe d'endpoints ;
- un bloc 43 de n modules de détection de type O3, dans lequel le module de détection 43ᵢ implémente le modèle M3ᵢ i = 1 à n et est adapté pour détecter spécifiquement les anomalies entre le i^{ème} client et l'ensemble des endpoints ;
- un bloc 44 de N*m modules de détection de type O4, dans lequel le module de détection 44ᵢ₋ⱼ implémente le modèle M4ᵢ₋ⱼ i = 1 à N et j = 1 à m est adapté pour détecter spécifiquement les anomalies entre le i^{ème} groupe de clients et le j^{ème} endpoint ;
- un bloc 45 de m modules de détection de type O5, dans lequel le module de détection 45ⱼ implémente le modèle M5ⱼ j = 1 à 3 et est adapté pour détecter spécifiquement les anomalies entre l'ensemble des clients et le j^{ème} endpoint ;
- un bloc 46 de N*M modules de détection de type O6, dans lequel le module de détection 46ᵢ₋ⱼ implémente le modèle M6ᵢ₋ⱼ i = 1 à N et j = 1 à M, et est adapté pour détecter spécifiquement les anomalies entre le i^{ème} groupe de clients et le j^{ème} groupe d'endpoints ;
- un bloc 47, appelé aussi module 47 de détection de type O7, qui implémente le modèle M7 et est adapté pour détecter spécifiquement les anomalies entre l'ensemble des clients et l'ensemble des endpoints.

### Phase de mise en production

Lors de la phase de production 200, des étapes 201 à 204 sont mises en œuvre par le module de contrôle 48 sur des données d'observation qui sont fournies en temps réel et en continu depuis la passerelle 20.

Dans une étape 201, ces données d'observations sont collectées, et optionnellement enrichies (comme décrit pour les étapes 101, 102).

Dans une étape 202, qui peut avoir eu lieu avant l'étape 201, il est choisi un angle d'observation ou plusieurs angles d'observations, parmi ceux de la liste L_{Angl-obs} issue de l'étape 104.

Dans une étape 203, le dispositif de surveillance 40 met en œuvre la surveillance à l'aide du ou des modules de détection d'anomalie correspondant aux angles d'observation choisis lors de la dernière étape 202 mise en œuvre. Par exemple il détermine des vecteurs de caractéristiques statistiques pour chaque angle d'observation choisi (de la même façon que décrite pour réaliser l'apprentissage du module de détection dédié à cet angle d'observation) en fonction des données d'observation courantes collectées à l'étape 201 et les fournit en entrée du module de détection associé, spécifiquement conçu pour détecter les anomalies selon cet angle d'observation.

A tout moment, une nouvelle étape 202 peut être déclenchée, modifiant le ou les angle(s) d'observation choisi(s).

Le choix d'angle(s) d'observation lors d'une étape 202 peut être fixé par un exploitant du dispositif 40, ou être un choix fixé par défaut au démarrage par le module de contrôle 48 de la phase d'exploitation, ou être réalisé par le module de contrôle 48 en fonction du contexte, notamment en fonction de l'une et/ou l'autre parmi :
- une anomalie détectée par un module de détection Mi (ou un autre module de détection à l'œuvre) sur une fenêtre d'observation analysée ;
- une variation de la disponibilité des ressources de traitement disponibles pour implémenter la surveillance du trafic ;
- une variation d'un volume de trafic à surveiller ;
- une variation du niveau de sécurité requis dans le système.

Un choix par défaut est par exemple l'un de ceux-ci :
- tous les angles d'observation de la liste L, ou encore
- l'angle de type O7 seulement, ou encore
- tous les angles d'observation de type O6, ou encore
- l'angle de type O7 et tous les angles d'observation de type O6.

Avec les modules de détection d'anomalie prête à l'emploi pour chaque angle d'observation de la liste L_{Angl-obs}, il est possible d'adapter dynamiquement l'approche analytique en fonction de la situation. Ceci permet de basculer d'un angle à un autre selon divers déclencheurs ou besoins spécifiques.

En pratique, cela signifie que tous les modèles peuvent fonctionner en parallèle et qu'une décision peut être prise basée sur l'alarme déclenchée par l'un d'eux ou une combinaison des alarmes. Sinon, il est possible de commencer avec un seul angle de vue, pour ensuite passer à un ou plusieurs autres selon les nécessités qui émergent. Il est même envisageable de remettre en question la décision d'un modèle en activant les modèles des autres angles de vue sur les données déjà analysées.

### Exemples de scénarios de surveillance et angles d'observation associés :

Scénario de haute priorité de sécurité : lorsque des opérations nécessitant une sécurité accrue sont prévues, l'angle d'observation le plus détaillé, O1, sera par exemple activé, pour assurer une surveillance étroite des interactions client-ressource.

Scénario de flux importants ou pics inattendus : si la sécurité n'est pas une priorité immédiate, mais que le système connaît une activité intense ou inhabituelle, une analyse plus globale utilisant l'angle d'observation O7 peut suffire à identifier les anomalies potentielles et sera donc choisi.

Scénario de flux modéré et sécurité de niveau modéré : lorsque les ressources de traitement disponibles pour effectuer la surveillance sont suffisantes et que le niveau de sécurité requis est modéré, il est approprié d'utiliser l'angle d'observation intermédiaire O6 pour maintenir un équilibre entre la précision de la surveillance et l'utilisation des ressources.

Scénario d'identification des ressources vulnérables : pour cibler les APIs les plus à risque, il est recommandé d'activer les angles d'observation O4 et O5, qui se concentrent sur les interactions entre les clients et les APIs spécifiques.

Scénario de détection d'utilisateurs malveillants : si l'objectif principal est de repérer les clients/utilisateurs potentiellement malveillants, les angles d'observation O2 et O3, qui se focalisent sur le comportement individuel des clients, doivent être privilégiés.

Scénario de détection d'anomalies : en cas de détection d'anomalies, il peut être judicieux de basculer vers un angle d'observation plus fin pour comprendre l'origine de l'anomalie (le client ou le groupe de clients concerné, le ou les (terminaux) utilisateurs correspondants, l'API ou le groupe d'APIs impliqué, etc.).

Ces exemples illustrent comment différents scénarios de surveillance peuvent être associés à un ou plusieurs angles d'observation spécifiques, permettant ainsi d'adapter la granularité de la surveillance en fonction des besoins et des priorités du système.

La solution selon l'invention est particulièrement adaptée aux entreprises qui gèrent de grands volumes de systèmes d'interaction client-serveur et pour lesquelles la sécurité est un enjeu crucial. Pour celles désirant une protection maximale à travers une analyse approfondie et minutieuse, notre stratégie se révèle idéale. Elle offre une grande flexibilité, permettant de passer d'une analyse globale à une analyse plus détaillée à tout moment.

La vision multi-échelle des interactions client-serveur, offerte par les différents angles d'observation, permet une compréhension approfondie des comportements. Elle permet des analyses prédictives et une sécurité proactive. L'invention marque une rupture par rapport aux approches traditionnelles rigides et peu évolutives, garantissant un niveau de sécurité optimal à tout instant.

La solution proposée offre des avantages significatifs grâce à l'exploitation de plusieurs granularités de surveillance. Cela permet une détection plus fine et pertinente des anomalies et des attaques, réduisant les fausses alertes et évitant le coût d'une approche individuelle. Dans un mode de réalisation, elle offre en outre une capacité d'adaptation dynamique de la granularité de surveillance selon le contexte, ce qui offre un degré d'optimisation supplémentaire de la finesse de détection ou d'efficacité dans l'utilisation des ressources de traitement disponibles pour effectuer la surveillance.

L'approche adaptative et multi-échelle de la surveillance utilise dynamiquement le type de méthode d'analyse et ajuste la granularité en fonction des ressources disponibles, du niveau de sécurité requis et du volume de données à traiter en temps réel.

L'allocation intelligente des ressources de surveillance en fonction des besoins réels optimise l'efficacité du système et maîtrise les coûts. La flexibilité de la solution garantit une adaptation rapide à l'évolution des menaces et des usages pour une sécurité pérenne et à la pointe.

Les applications sont nombreuses, notamment dans tout système impliquant des interactions client-serveur à grande échelle et ayant des besoins de sécurité élevés et variables, comme les services web, les API, les bases de données, les systèmes de messagerie la supervision et la sécurité des systèmes d'information d'entreprises, la protection d'infrastructures critiques et de systèmes industriels, la détection d'intrusions pour les fournisseurs de services et opérateurs télécoms, la surveillance du trafic pour l'optimisation et le dimensionnement des réseaux etc. Au-delà de la détection d'attaques, elle peut également servir à identifier des dysfonctionnements, des causes de dégradations de performances ou des usages non optimaux de ressources réseau. Son caractère générique la rend aisément transposable à différents contextes applicatifs nécessitant une analyse fine et réactive des séries temporelles.

Lors de l'ajout de nouveaux endpoints ou de client, il est nécessaire de répéter les étapes permettant de représenter le comportement utilisateur avec toutes les ressources de type endpoint par une série temporelle. Ensuite, il faut identifier et associer ce client au cluster de clients le plus proche. De même, lors de l'introduction d'un nouvel endpoint, il suffit de l'intégrer au cluster d'endpoints le plus proche.

Par ailleurs, la répartition en groupes côté clients et côté serveur est répétée de façon régulière, dans un mode de réalisation, pour s'adapter aux évolutions des comportements.

### Exemple de génération d'échantillons et de vecteurs de caractéristiques

Comme vu précédemment, dans la phase préalable 100 et la phase d'exploitation 200, les données d'observations éventuellement enrichies sont exploitées afin d'en extraire des vecteurs de caractéristiques (utilisés pour la conception/l'exploitation des modules de détection d'anomalies).

Pour déterminer ces vecteurs de caractéristiques, dans un mode de réalisation, des échantillons d'observation sont d'abord générés.

Pour cela, les données d'observation relatives à un même intervalle de temps de durée Te et correspondant à un même angle d'observation sont regroupées entre elles de manière à générer un échantillon d'observations. La fréquence Fe = 1/Te rythmant ce regroupement, qu'on appelle ci-dessous fréquence d'échantillonnage, est choisie selon un ou plusieurs critères par exemple tels que :
- fréquence moyenne des requêtes ;
- exigences de détection : une fréquence suffisante pour détecter rapidement les anomalies ;
- contraintes de stockage et traitement, pour un équilibre entre granularité et coûts.

Chaque échantillon est ensuite décrit par des caractéristiques statistiques calculées par le module de contrôle 48 à partir des données d'observation regroupées sur l'intervalle de temps Te pour générer cet échantillon, telles que :
- métrique(s) de fréquence et ratio : fréquence absolue, relative, ratios...
- métrique(s) de diversité : valeurs distinctes, entropie, indices de Gini/Simpson...
- métrique(s) de tendance centrale et dispersion : quartiles, écart interquartile, moyenne tronquée...
- métrique(s) de forme de distribution : asymétrie, kurtosis...

Les définitions et utilités de telles métriques sont bien connues. Toutes ces métriques ne s'appliquent pas à tous les champs selon leur nature catégoriels ou continu.

A titre d'exemple, les caractéristiques statistiques suivantes sont calculées pour un échantillon de logs sur Te=10 secondes, déterminé pour l'instant de calcul t (donc calculé sélectivement sur les logs dont le timestamp est dans la plage t et t+Te)
nombre de requêtes (dans la plage t et t+Te)
proportion de chaque méthode HTTP
quartiles des durées de requêtes
entropie des codes statut
coefficient d'asymétrie de la distribution des tailles de requêtes.

En considérant cette fois les paquets IP, par exemple, les caractéristiques statistiques suivantes sont calculées pour un échantillon de paquets sur Te=10 secondes (s), déterminé pour l'instant de calcul t (donc calculé sélectivement sur les paquets transmis dans la plage t et t+Te) :
nombre de paquets
taille moyenne des paquets
ratio paquets entrants/sortants
90ème percentile du temps inter-arrivées
proportion de paquets avec flag SYN.

### Le module de contrôle 48 obtient ainsi un vecteur de caractéristiques par échantillon.

Un exemple de vecteur de caractéristiques par échantillon est donné dans le tableau ci-dessous dans le cas des logs :

**[Table 4]**

| Timestamp début | Nb requêtes | % GET | % POST | Q1 durée | Médiane durée | Q3 durée | Entropie codes | Asymétrie tailles |
|---|---|---|---|---|---|---|---|---|
| 1622146800 | 215 | 0.72 | 0.28 | 120ms | 230ms | 410ms | 1.28 | 1.42 |

Un exemple de vecteur de caractéristiques par échantillon est donné dans le tableau ci-dessous dans le cas des paquets IP :

```
[Table 5]
```

| Timestamp début | Nb paquets | **Taille** moy. | Ratio in/out | 90p inter-arrivées | % SYN |
|---|---|---|---|---|---|
| 1622146800 | 12450 | 782 octets | 1.32 | 15ms | 0.03 |

### Autre exemple de construction de vecteur de caractéristiques d'un échantillon

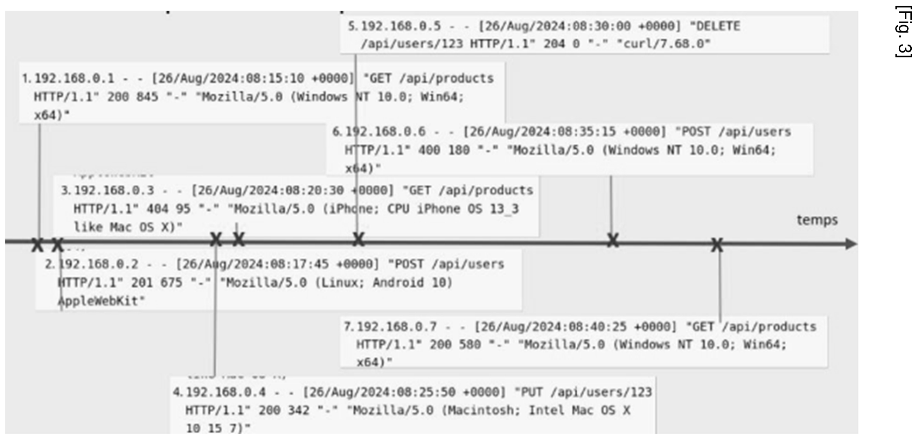

En référence à la figure 3 décrivant les logs successifs correspondant à un angle d'observation fixé et à regrouper dans un échantillon, les métriques de fréquence et de ratio suivantes sont calculées, en considérant les aspects « Méthode http » et « Code statut ».

### Fréquence absolue :

### Méthode HTTP:

GET: 3
POST: 2
PUT: 1
DELETE: 1

### Code statut:

200: 3
201: 1
404: 1
204: 1
400: 1

### Fréquence relative (proportion) :

### Méthode HTTP:

GET: 3 / 7 = 0.429
POST: 2 / 7 = 0.286
PUT: 1 / 7 = 0.143
DELETE: 1 / 7 = 0.143

### Code statut:

200: 3 / 7 = 0.429
201: 1 7 = 0.143
404: 1 / 7 = 0.143
204: 1 / 7 = 0.143
400: 1 / 7 = 0.143

### Ratio entre les deux valeurs les plus fréquentes :

**Méthode HTTP:**
   Ratio (GET / POST): 3 / 2 = 1.5
**Code statut:**
   Ratio (200 / 201): 3 / 1 = 3.0

### Top N des valeurs les plus fréquentes :

### Top 2 Méthode HTTP:

GET: 3 occurrences
POST: 2 occurrences

### Top 2 Code statut:

200: 3 occurrences
201: 1 occurrence (avec 404, 204, 400)

### Ratio de la valeur la plus fréquente

**Méthode HTTP:**
   Ratio (GET): 3 / 7 = 0.429
**Code statut:**
   Ratio (200): 3 / 7 = 0.429

Les métriques de diversité suivantes sont calculées, pour ces aspects « Méthode http » et « Code de statut ».

### Méthode HTTP:

Observations : GET, POST, PUT, DELETE, POST, GET
Fréquences : GET: 3, POST: 2, PUT: 1, DELETE: 1
   Nombre total d'observations: 7
   Nombre de valeurs distinctes : 4 (GET, POST, PUT, DELETE)
Ratio entre le nombre de valeurs distinctes et le nombre total d'observations :
   4/7≈0.57174 47≈0.571
   Entropie de Shannon : =1.842 bits
   Indice de diversité de Simpson de Simpson ≈0.653
   Indice de Gini de Gini ≈0.653 ≈0.653 ≈0.653

### Code statut :

Observations : 200, 201, 404, 200, 204, 400, 200
Fréquences : 200: 3, 201: 1, 404: 1, 204: 1, 400: 1
Nombre total d'observations : 7
Nombre de Nombre de valeurs distinctes : 5 (200, 201, 404, 204, 400)
Ratio entre le nombre de valeurs distinctes et le nombre total d'observations : 57≈0.71475 ≈ 0.714

Entropie de Shannon ≈2.128 bits
Indice de diversité de Simpson ≈0.775
Indice de Gini ≈0.775

Le vecteur de caractéristiques comprend ainsi, pour l'aspect « Méthode http », les composantes suivantes :
1.Nombre total d'observations: 7
2.Fréquence absolue de GET: 3
3.Fréquence absolue de POST: 2
4.Fréquence absolue de PUT: 1
5.Fréquence absolue de DELETE: 1
6.Fréquence relative de GET: 0.429
7.Fréquence relative de POST: 0.286
8.Fréquence relative de PUT: 0.143
9.Fréquence relative de DELETE: 0.143
10.Ratio entre GET et POST: 1.5
11.Top 2 des méthodes les plus fréquentes: GET, POST
12.Ratio de la valeur la plus fréquente(GET): 0.429
13.Nombre de valeurs distinctes: 4
14.Ratio de diversité: 0.571
15.Entropie de Shannon: 1.842 bits
16.Indice de diversité de Simpson: 0.653

Cette partie du vecteur de caractéristiques relative à l'aspect « Methode http » peut être ainsi représentée, pour un seul échantillon donné :
HTTP_Features=[7,3,2,1,1,0.429,0.286,0.143,0.143,1.5,"GET,POST",0.429,4,0.571,1 .842,0.653,0.653]

Pour gérer une taille fixe de la partie "Fréquence absolue", qui peut varier en fonction des différentes valeurs prises par la méthode, on peut se limiter aux méthodes les plus courantes et les plus connues: GET, POST, PUT, HEAD etc.

Similairement, le vecteur de caractéristiques comprend ainsi, pour l'aspect « Code statut », les composantes suivantes :
1.Nombre total d'observations: 7
2.Fréquence absolue de 200: 3
3.Fréquence absolue de 201: 1
4.Fréquence absolue de 404: 1
5.Fréquence absolue de 204: 1
6.Fréquence absolue de 400: 1
7.Fréquence relative de 200: 0.429
8.Fréquence relative des autres(201, 404, 204, 400): 0.143 chacun
9.Ratio entre 200 et 201: 3.0
10.Top 2 des codes de statut: 200, 201
11.Ratio de la valeur la plus fréquente (200): 0.429
12.Nombre de valeurs distinctes: 5
13.Ratio de diversité: 0.714
14.Entropie de Shannon: 2.128 bits
15.Indice de diversité de Simpson: 0.775
16.Indice de Gini: 0.775

Cette partie du vecteur de caractéristiques relative à l'aspect « code statut », pour un seul échantillon donné, peut être ainsi représentée :
Status_Features=[7,3,1,1,1,1,0.429,0.143,0.143,0.143,0.143,3.0,"200,201",0.429,5,0.714,2.1 28,0.775,0.775]

La même considération que précédemment s'applique pour avoir une taille fixe.

Dans l'exemple décrit ci-dessus, le dispositif de surveillance du trafic 40 met en œuvre les phases préalable 100 et de mise en production 200. Dans un autre mode de réalisation, des modules distincts effectuent les étapes de ces phases respectives.

Dans ce qui précède, il a été considéré que les communications transitaient par un module passerelle 20. Dans d'autres modes de réalisation, l'invention est mise en œuvre sans module passerelle, avec un système de journalisation qui enregistre les données d'observation relatives aux communications ayant lieu dans le système entre utilisateurs et ressources. Suivant les modes de réalisations, les données de trafic considérées sont représentées par exemple sous forme de fichiers type PCAPs (de l'anglais « packet capture ») ou encore sous forme de logs au niveau applicatif ou toute autre forme représentant les communications dans le réseau. Dans un mode de réalisation les observations sont obtenues en capturant le trafic transitant entre utilisateurs et ressources, au niveau d'une sonde placée dans le réseau.

Dans ce qui précède, il a été considéré une taille des échantillons exprimée en temps. Dans un autre mode de réalisation, la taille considérée est exprimée en nombre de logs (ou de paquets IP).

Dans l'exemple décrit plus haut, des échantillons correspondant à 10 s ont été considérés, puis des vecteurs de caractéristiques calculés pour chacun de ces échantillons ont été sériés temporellement pour générer les vecteurs de caractéristiques des fenêtres d'observation. Dans un autre mode de réalisation, à la place des échantillons de 10 s, il est considéré des échantillons correspondant à toute la durée T.

La taille de l'échantillon peut être définie par une durée temporelle, comme tous les logs/paquets enregistrés pendant 10 secondes ou encore par un nombre fixé d'observations, par exemple 3 logs/paquets.

Les étapes du procédé incombant au module de contrôle 48, respectivement le module de détermination 50, peuvent être mises en œuvre par l'exécution d'instructions logicielles (mémorisées dans une mémoire du dispositif de surveillance 40) sur un processeur du dispositif de surveillance 40. Alternativement, elles peuvent être mises en œuvre par un hardware dédié, typiquement un circuit intégré numérique, soit spécifique (ASIC) ou basé sur une logique programmable (par exemple FPGA/Field Programmable Gate Array).

## Revendications

1. Procédé de surveillance du trafic de données dans un système de communication (1) entre des clients (10) et des serveurs (30),
selon lequel, dans une phase préalable, des groupes de clients et/ou des groupes de serveurs ont été définis, et plusieurs modules distincts parmi des modules de détection automatique d'anomalies du trafic M1, M2, ..., M7, ont été conçus chacun en fonction de données d'observation du trafic d'une base d'historique correspondant spécifiquement à un seul type respectif d'angles d'observation du trafic parmi les suivants :
type O1 d'angle d'observation propre au trafic entre un unique client donné et un unique serveur donné ;
type O2 d'angle d'observation propre au trafic entre un unique client donné et un groupe de serveurs donné ;
type O3 d'angle d'observation propre au trafic entre un unique client donné et l'ensemble des serveurs ;
type O4 d'angle d'observation propre au trafic entre un unique groupe de clients donné et un unique serveur donné ;
type O5 d'angle d'observation propre au trafic entre l'ensemble des clients et un unique serveur donné ;
type O6 d'angle d'observation propre au trafic entre un unique groupe de clients donné et un unique groupe de serveurs donné ;
type O7 d'angle d'observation propre au trafic entre l'ensemble des clients donné et l'ensemble des serveurs donné ;
ledit procédé comprend les étapes suivantes mises en œuvre par un dispositif électronique de surveillance du trafic des données (40), en phase opérationnelle :
- collecter des données d'observation du trafic courant entre les clients (10) et les serveurs (30) ;
- effectuer à l'aide d'un desdits modules distincts de détection automatique d'anomalies du trafic (M1₁₋₁), Mi, qui est adapté pour détecter des anomalies spécifiquement dans le trafic correspondant au type Oi d'angle d'observation, une analyse d'une partie au moins des données d'observation courantes collectées et correspondant spécifiquement au type Oi d'angle d'observation considéré, i étant un entier compris entre 1 et 7 ;
- effectuer à l'aide d'un autre desdits modules distincts de détection automatique d'anomalies du trafic (M2₁₋₁), Mj, j étant un entier compris entre 1 et 7 et j≠i, qui est adapté pour détecter des anomalies spécifiquement dans le trafic correspondant au type Oj d'angle d'observation, une analyse d'une partie au moins des données d'observation courantes collectées et correspondant spécifiquement au type Oj d'angle d'observation considéré ;
selon lequel l'un ou l'autre desdits modules distincts de détection automatique Mi, Mj est un module M6, correspondant spécifiquement à l'angle d'observation O6.

2. Procédé de surveillance du trafic de données selon la revendication 1, selon lequel l'analyse par le module Mj de détection automatique d'anomalies du trafic correspondant spécifiquement au type Oj d'angle d'observation considéré est déclenchée à l'issue d'une première période d'analyse par le module Mi de détection automatique d'anomalies du trafic correspondant spécifiquement au type Oi d'angle d'observation.

3. Procédé de surveillance du trafic de données selon la revendication 2, selon lequel ledit déclenchement est effectué en fonction de l'un au moins des événements parmi :
- une anomalie détectée par le module Mi ;
- une variation de la disponibilité des ressources de traitement disponibles pour implémenter la surveillance du trafic ;
- une variation d'un volume de trafic à surveiller ;
- une variation du niveau de sécurité requis dans le système.

4. Procédé de surveillance du trafic de données selon l'une quelconque des revendications 2, 3, selon lequel N groupes de clients ayant été définis et M groupes de serveurs ayant été définis, lesdits modules distincts de détection automatique comportent au moins :
- N x M modules M6 (M6₁₋₁,... M6_{N-M})de type O6 d'angle d'observation propre au trafic entre un unique groupe de clients donné parmi les N groupes de clients et un unique groupe de serveurs donné parmi les M groupes de serveurs, dans lequel le (t+k)^{ème} module M6, nommé M6k est adapté pour détecter une anomalie sélectivement entre le t^{éme} groupe de clients donné, t = 1 à N, et le k^{ème} groupe de serveurs donné parmi les M groupes de serveurs, k = 1 à M.

5. Procédé de surveillance du trafic de données selon la revendication 4, selon lequel lesdits modules distincts de détection automatique comportent en outre au moins :
- un module M7 de détection automatique d'anomalies du trafic, i = 7, correspondant au type O7 d'angle d'observation propre au trafic entre l'ensemble des clients donné et l'ensemble des serveurs donné ;

6. Procédé de surveillance du trafic de données selon l'une quelconque des revendications précédentes, selon lequel les données d'observation courantes fournies en entrée des modules distincts sont relatives à un intervalle temporel commun et une anomalie est déterminée présente ou non en fonction desdits résultats de détection fournis sur ledit intervalle temporel commun par les modules distincts.

7. Procédé de surveillance du trafic de données selon l'une quelconque des revendications précédentes, selon lequel les groupes de clients sont déterminés en fonction de vecteurs de statistiques descriptives calculées pour chaque client (10) à partir des données d'observation du trafic de base d'historique, et caractérisant son comportement ; et les groupes de serveurs sont déterminés en fonction de vecteurs de statistiques descriptives calculées pour chaque serveur (30) à partir des données d'observation du trafic de base d'historique caractérisant la façon dont ils sont sollicités par les clients.

8. Programme d'ordinateur, destiné à être stocké dans la mémoire d'un dispositif de surveillance de trafic (40) et comprenant en outre un microcalculateur, ledit programme d'ordinateur comprenant des instructions qui, lorsqu'elles sont exécutées sur le microcalculateur, mettent en œuvre les étapes d'un procédé selon l'une des revendications précédentes.

9. Dispositif de surveillance du trafic de données (40) dans un système de communication (1) entre des clients (10) et des serveurs (30),
selon lequel, des groupes de clients et/ou des groupes de serveurs ayant été définis, ledit dispositif de surveillance comprend plusieurs modules distincts parmi des modules de détection automatique d'anomalies du trafic M1, M2, ..., M7, chaque module distinct ayant été conçu, dans une phase préalable, en fonction de données d'observation du trafic d'une base d'historique correspondant spécifiquement à un seul type respectif d'angles d'observation du trafic parmi les suivants :
type O1 d'angle d'observation propre au trafic entre un unique client donné et un unique serveur donné ;
type O2 d'angle d'observation propre au trafic entre un unique client donné et un groupe de serveurs donné ;
type O3 d'angle d'observation propre au trafic entre un unique client donné et l'ensemble des serveurs ;
type O4 d'angle d'observation propre au trafic entre un unique groupe de clients donné et un unique serveur donné ;
type O5 d'angle d'observation propre au trafic entre l'ensemble des clients et un unique serveur donné ;
type O6 d'angle d'observation propre au trafic entre un unique groupe de clients donné et un unique groupe de serveurs donné ;
type O7 d'angle d'observation propre au trafic entre l'ensemble des clients donné et l'ensemble des serveurs donné ;
dans lequel ledit dispositif électronique de surveillance du trafic des données (40) est adapté pour collecter des données d'observation du trafic courant entre les clients et les serveurs ;
ledit dispositif électronique de surveillance du trafic des données (40) est adapté pour effectuer à l'aide d'un desdits modules distincts de détection automatique d'anomalies du trafic, Mi, qui est adapté pour détecter des anomalies spécifiquement dans le trafic correspondant au type Oi d'angle d'observation, une analyse d'une partie au moins des données d'observation courantes collectées et correspondant spécifiquement au type Oi d'angle d'observation considéré, i étant un entier compris entre 1 et 7 ;
ledit dispositif électronique de surveillance du trafic des données (40) est adapté pour effectuer à l'aide d'un autre desdits modules distincts de détection automatique d'anomalies du trafic, Mj, qui est adapté pour détecter des anomalies spécifiquement dans le trafic correspondant au type Oj d'angle d'observation, j étant un entier compris entre 1 et 7 et j≠i, une analyse d'une partie au moins des données d'observation courantes collectées et correspondant spécifiquement au type Oj d'angle d'observation considéré ;
dans lequel l'un ou l'autre desdits modules distincts de détection automatique est un module M6, correspondant spécifiquement à l'angle d'observation O6.

10. Dispositif de surveillance du trafic de données (40) selon la revendication 9, adapté pour déclencher l'analyse par le module Mj de détection automatique d'anomalies du trafic correspondant spécifiquement au type Oj d'angle d'observation considéré à l'issue d'une première période d'analyse par le module Mi de détection automatique d'anomalies du trafic correspondant spécifiquement au type Oi d'angle d'observation.
